# NEUE EUROPÄISCHE PATENTSCHRIFT

(11) **EP 2 906 430 B2**
(45) Veröffentlichungstag und Bekanntmachung des Hinweises auf die Entscheidung über den Einspruch: **03.05.2023**
(45) Hinweis auf die Patenterteilung: 03.08.2016
(21) Anmeldenummer: 13779529.0
(22) Anmeldetag: 07.10.2013
(51) Int. Cl.: B42D 25/00

(54) **SICHERHEITSMERKMAL FÜR EIN WERT- UND/ODER SICHERHEITSPRODUKT MIT FARBVERLAUFSSTRUKTUR UND DAS SICHERHEITSMERKMAL AUFWEISENDES WERT- UND/ODER SICHERHEITSDOKUMENT**
SECURITY FEATURE WITH A COLOUR PROGRESSION STRUCTURE FOR A VALUE PRODUCT AND/OR SECURITY PRODUCT, AND VALUE DOCUMENT AND/OR SECURITY DOCUMENT HAVING THE SECURITY FEATURE
CARACTÉRISTIQUE DE SÉCURITÉ DESTINÉE À UN PRODUIT DE VALEUR ET/OU DE SÉCURITÉ ET PRÉSENTANT UNE STRUCTURE DE DÉGRADÉ DE COULEUR, ET DOCUMENT DE VALEUR ET/OU DE SÉCURITÉ MUNI DE LADITE CARACTÉRISTIQUE DE SÉCURITÉ

(30) Priorität: 12.10.2012 DE 102012218615
(43) Veröffentlichungstag der Anmeldung: 19.08.2015
(73) Patentinhaber: Bundesdruckerei GmbH, 10969 Berlin (DE)
(72) Erfinder: PEINZE, Franziska, 12587 Berlin (DE); MATHEA, Arthur, 14199 Berlin (DE)
(74) Vertreter: Patentanwälte Bressel und Partner mbB
(86) Internationale Anmeldenummer: PCT/EP2013/070800
(87) Internationale Veröffentlichungsnummer: WO 2014/056832

(56) Entgegenhaltungen:
- EP-A1- 1 270 246
- EP-A2- 0 149 542
- EP-A2- 1 118 468
- EP-A2- 1 719 637
- EP-B1- 2 119 218
- WO-A1-98/40223
- WO-A1-2004/050376
- DE-A1-102010 062 032
- GB-A- 2 470 596
- US-A1- 2004 209 096
- US-A1- 2004 233 465
- US-A1- 2010 157 377
- US-B1- 7 054 038
- US-B2- 7 880 131
- US-B2- 8 085 438

## Beschreibung

Die vorliegende Erfindung betrifft ein Sicherheitsmerkmal für ein Wert- und/oder Sicherheitsprodukt mit einer Farbverlaufsstruktur und ein dieses Sicherheitsmerkmal enthaltendes Wert-und/oder Sicherheitsprodukt, insbesondere ein Wert- und/oder Sicherheitsdokument oder Sicherheitselement. Ein Wert- und/oder Sicherheitsdokument kann beispielsweise ein Personal-dokument, insbesondere ein Personalausweis, oder ein Zahlungsmittel, insbesondere eine Banknote, sein. Im Falle eines Personalausweises trägt dessen Vorderseite zum Beispiel das Lichtbild sowie den Namen des Inhabers. Derartige Dokumente werden typischerweise in normierten Formaten hergestellt, beispielsweise im ID 1-, ID 2- oder ID 3-Format gemäß ISO 7810. Die Dokumente können grundsätzlich aus einem organischen Polymer oder einem Keramikwerkstoff, Papier, Pappe oder aus Metall bestehen oder dieses enthalten. Karten und kartenförmige Bestandteile von buchartigen Dokumenten können vorzugsweise aus miteinander laminierten Polymerfolien hergestellt sein.

Die in den Wert- und/oder Sicherheitsdokumenten eingesetzten Sicherheitsmerkmale können ausschließlich dazu dienen, die Echtheit der Produkte unabhängig von ihrer Art oder von ihrem Benutzer nachzuweisen. Derartige Sicherheitsmerkmale sind beispielsweise Melierfasern, Guillochen, das Spezialpapier von Banknoten und dergleichen. Individualisierende, beispielsweise personalisierende, Sicherheitsmerkmale enthalten darüber hinaus in kodierter Form oder auch in Klarschrift eine Information über die Art des Dokuments, den Benutzer dieses Dokuments oder einen Gegenstand, dem das Dokument eindeutig zugeordnet ist. Derartige Informationen können ein Gesichtsbild (Photographie) des Benutzers, seine persönlichen Daten, wie der Name, der Geburtstag, der Geburtsort, die Unterschrift oder eine persönliche Kennung, wie eine Mitgliedsnummer, sein. Ein anderes das Dokument individualisierendes Sicherheitsmerkmal kann beispielsweise eine Seriennummer des Dokuments oder die Fahrgestellnummer eines Kraftfahrzeuges sein, dem das Dokument zugeordnet ist.

Eine von den vorgenannten verschiedene Art von Sicherheitsmerkmalen ist der Irisdruck, der im Hochdruck- oder Offsetdruckverfahren hergestellt wird (DE 10 2007 059 747 A1). Beispielsweise ist in DE 10 2006 050 120 A1 ein Verfahren zur individuellen Kennzeichnung eines Druckproduktes zur Sicherung von dessen Authentizität beschrieben. Für die Durchführung dieses Verfahrens wird eine mehrere Druckwerke aufweisende Druckmaschine zum Bedrucken von Druckbögen mit mehreren Teilbildern genutzt, wobei ein Platten- oder Formzylinder in wenigstens einem Druckwerk der Druckmaschine einen steuerbaren Antrieb aufweist. Sollwertvorgaben zur Lagesteuerung/-regelung werden für wenigstens einen steuerbaren Antrieb eines Platten- oder Formzylinders eines der Druckwerke ständig verändert, sodass die Lage des jeweiligen Druckbildes auf dem Druckbogen ständig in definierter Weise variiert wird.

In DE 10 2008 012 423 A1 ist ferner ein Polymerschichtverbund aus mehreren Polymerschichten mit einem farbigen Sicherheitsmerkmal angegeben, wobei eine Information in mehrere Druckauszüge zerlegt wird, die jeweils eine Teilinformation der Information umfassen und die auf unterschiedliche Substratschichtoberflächen abgestimmt gedruckt werden. In diese Information können Farbübergänge integriert werden, beispielsweise ein Irisdruck. Hierzu können die Bildpunkte einer ersten Farbe in einem Druckauszug und die Bildpunkte einer zweiten Farbe in einem weiteren Druckauszug gedruckt werden. Die Substratschichtoberflächen werden mit den verschiedenen Druckauszügen mittels eines digitalen Druckverfahrens, beispielsweise mit einem Tintenstrahldruckverfahren bedruckt.

In DE 10 2008 012 421 B3 ist ferner ein Wert- und/oder Sicherheitsdokument mit einem monolithischen Dokumentenkörper beschrieben. Auf mindestens einer der Substratschichten dieses Dokumentenkörpers ist ein Sicherheitsmerkmal aufgebracht, welches ein feines Linienmuster umfasst. Dieses Sicherheitsdruckmuster ist in mindestens zwei Druckauszüge aufgeteilt, die einander ergänzen, sodass beim Drucken eines jeden der Druckauszüge jeweils ein Anteil von mindestens einer feinen Linie gedruckt wird. Die mindestens zwei Druckauszüge werden mit mindestens zwei unterschiedlichen Druckverfahren gedruckt. Zumindest einer der Druckauszüge wird mit einem Tintenstrahldruckverfahren und mindestens ein weiterer Druckauszug mit einem Nass-Offset- oder wasserlosen Offset-Druckverfahren erzeugt.

Das Dokument EP-A-1 270 246 und US 2004/0233465 A1 offenbaren jeweils ein Sicherheitsmerkmal nach dem Oberbegriff des Anspruchs 1.

Es besteht jedoch ein ständiger Bedarf an neuartigen, insbesondere individualisierenden, beispielsweise personalisierenden, Sicherheitsmerkmalen, die gegen eine Fälschung und/oder Verfälschung und/oder Kopie gesichert sind und die zur Zuordnung der damit kodierten Information zu dem Benutzer und/oder dem Gegenstand von einer Person leicht erkennbar sind. Vorzugsweise soll sich das Sicherheitsmerkmal in einer gegen Fälschung und/oder Verfälschung und/oder Kopie sicheren inneren Produktlage befinden. Der vorliegenden Erfindung liegt darüber hinaus die wesentliche weitere Aufgabe zugrunde, ein kostengünstig, einfach und schnell realisierbares, insbesondere individualisierendes, Sicherheitsmerkmal zu schaffen. Ein Nachteil herkömmlicher Herstellmethoden für lumineszierende Personenbilder und anderer Muster besteht darin, dass es zum derzeitigen Zeitpunkt an der Verfügbarkeit von hierfür geeigneten Rohstoffen, wie Pigmenten, und den entsprechenden Druckfarben für einen Druckprozess sowie den erforderlichen Hilfsmitteln zur Kalibrierung der Einzelfarben bzw. auch für den Zusammendruck aller Farben, wie es das Farbmanagement für CMYK-Farben oder RGB-Displays ermöglicht, fehlt.

Soweit in der Beschreibung und in den Ansprüchen der vorliegenden Anmeldung der Begriff ,Wert- und/oder Sicherheitsprodukt', das insbesondere ein Wert- und/oder Sicherheitsdokument oder ein Sicherheitselement sein kann, verwendet wird, ist darunter beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes ID-Dokument zu verstehen. Als erfindungsgemäßes Produkt ist auch ein Sicherheitselement zu verstehen, das das erfindungsgemäße Sicherheitsmerkmal aufweist und das mit dem Dokument unlösbar verbunden werden kann, beispielsweise ein Aufkleber, Etikett oder dergleichen. Das Produkt kann beispielsweise eine Smartcard sein. Das Sicherheits- und/oder Wertdokument kann im ID 1-, ID 2-, ID 3- oder in irgendeinem anderen Format vorliegen, beispielsweise in Heftform, wie bei einem passähnlichen Gegenstand. Ein Sicherheits- und/oder Wertprodukt ist im Allgemeinen ein Laminat aus mehreren Dokumentenlagen, die passergenau unter Wärmeeinwirkung und unter erhöhtem Druck flächig miteinander verbunden sind. Diese Produkte sollen den normierten Anforderungen genügen, beispielsweise ISO 10373, ISO/IEC 7810, ISO 14443. Die Produktlagen bestehen beispielsweise aus einem Trägermaterial, das sich für eine Lamination eignet.

Soweit in der Beschreibung und in den Ansprüchen der vorliegenden Anmeldung der Begriff 'Sicherheitsmerkmal' genannt wird, ist darunter gemäß der vorliegenden Erfindung der auf einen Betrachter wirkende optische Eindruck zu verstehen, der durch ein lumineszierendes Muster von in einer relativen Anordnung zueinander liegenden lumineszierenden Musterelementen erzeugt wird. Das Sicherheitsmerkmal kann als Bestandteil eines Wert- und/oder Sicherheitsdokuments oder als separates Produkt (Sicherheitselement) hergestellt werden. Letzteres kann beispielsweise auf das Dokument aufgeklebt werden. Das Sicherheitsmerkmal wird im Allgemeinen nur einen Teil der Fläche des Dokuments einnehmen.

Soweit in der Beschreibung und in den Ansprüchen der vorliegenden Anmeldung der Begriff 'Lumineszenz' genannt wird, ist darunter Fluoreszenz, Phosphoreszenz und zwar sowohl mit Stokes- als auch Anti-Stokes-Verschiebung zu verstehen. Gemäß der vorliegenden Erfindung ist darunter Photolumineszenz zu verstehen.

Soweit in der Beschreibung und in den Ansprüchen der vorliegenden Anmeldung der Begriff 'Muster' genannt wird, ist darunter eine irgendwie gestaltete Verteilung von mit dem menschlichen Auge wahrnehmbaren Elementen, vorzugsweise in zweidimensionaler Anordnung auf einer oder mehreren Oberflächen, zu verstehen, die eine in sich geschlossene Darstellung ergeben, beispielsweise ein Bild, Bildelement, Zeichen, insbesondere ein alphanumerisches Zeichen, ein Symbol, Wappen, eine Linie, Formel oder dergleichen. Im Sinne der vorliegenden Erfindung ist als Muster auch eine in nur einer Farbe lumineszierende einheitliche, nicht strukturierte Fläche zu verstehen. Diese Fläche kann beispielsweise durch deren Farbe eine Information enthalten.

Soweit in der Beschreibung und in den Ansprüchen der vorliegenden Anmeldung der Begriff 'Musterelement' genannt wird, ist darunter ein Bestandteil/Element eines Musters zu verstehen (Pixel). Ein Musterelement dient als kleinstes Strukturelement zur Bildung des Musters, wobei alle Musterelemente das Muster bilden. Das ein Musterelement bildende Material kann entweder transparent, transluzent oder opak sein. Ferner kann es eine bestimmte Helligkeit (Absorption, Remission) haben, d.h. es kann beispielsweise eine Schwärzung, Grautönung oder Weißtönung aufweisen, und/oder es kann eine (spektrale) Färbung und in dieser wiederum eine bestimmte Helligkeit aufweisen. Die Musterelemente können eine kreisförmige (punktförmige), rechteckige, quadratische, sechseckige oder noch andere Form aufweisen. Musterelemente können die kleinsten Elemente einer wahrnehmbaren Darstellung sein, denen in einem bunten Farbraum (additiver RGB-Farbraum) jeweils einer der Farbwerte oder Farbtöne zugeordnet werden kann.

Die der vorliegenden Erfindung zugrunde liegende Aufgabe wird durch das erfindungsgemäße Sicherheitsmerkmal für ein Wert-und/oder Sicherheitsprodukt sowie durch das erfindungsgemäße Wert- und/oder Sicherheitsdokument, das mindestens eines der erfindungsgemäßen Sicherheitsmerkmale enthält, gelöst.

Die Aufgabe wird durch Gegenstände mit den Merkmalen gemäß der Patentansprüche 1 und 4 erfindungsgemäß gelöst.

Das Sicherheitsmerkmal ist durch ein auf mindestens einer Trägeroberfläche gebildetes Muster gebildet, das eine Farbverlaufsstruktur, beispielsweise ein Iris, aufweist. Die Farbverlaufsstruktur ist aus in einem Raster angeordneten Musterelementen gebildet, d.h. in einer regelmäßigen Anordnung. Hierzu wird ein digitales Druckverfahren herangezogen. In erfindungsgemäßer Art und Weise ist die Farbverlaufsstruktur mit mindestens zwei spektral unterschiedlich lumineszierenden Farbmitteln, nämlich Lumineszenzmitteln, erzeugt.

Somit wurde eine Lösung gefunden, ein Muster unter Anregungsbedingungen für Lumineszenz mehrfarbig darzustellen, ohne dass eine aufwändige Materialentwicklung notwendig ist. Durch eine mittels eines digitalen Druckverfahrens realisierbare Rasterung des Musters in Musterelemente kann die Farbverlaufsstruktur gebildet werden, indem die Farben im Übergangsbereich aufgelöst werden. Mittels des digitalen Druckverfahrens ist außerdem eine schnelle Realisierung von individualisierenden Sicherheitsmerkmalen möglich. Die einfache Darstellung eines Iris im Digitaldruck mit einer Aufrasterung ermöglicht eine schnelle Erzeugung eines optisch ansprechenden Sicherheitsmerkmals.

Mit der Farbverlaufsstruktur wird ein unter Lumineszenz-Beleuchtungsbedingungen mit dem Auge sichtbares Sicherheitsmerkmal, beispielsweise in Form eines Portraitbildes einer Person, insbesondere des Dokumenteninhabers, gebildet. Derartige Lumineszenz-Beleuchtungsbedingungen liegen dann vor, wenn elektromagnetische Strahlung auf das Sicherheitsmerkmal auffällt, die zu dessen Anregung zur Lumineszenz geeignet ist, beispielsweise UV-Licht, In diesem Falle muss nicht, kann aber zusätzlich Licht im sichtbaren Spektralbereich auf das Sicherheitsmerkmal fallen. Das Sicherheitsmerkmal kann unter normaler Beleuchtung (umfasst ausschließlich Licht im sichtbaren Spektralbereich) farblos, grau oder weiß erscheinen. Allerdings hängt das unter normalen Beleuchtungsbedingungen wahrnehmbare Erscheinungsbild des Sicherheitsmerkmals von der Art der verwendeten Lumineszenzmittel ab: Wenn diese nur unter den für die Anregung zur Lumineszenz geeigneten Beleuchtungsbedingungen Licht absorbieren, sind sie beispielsweise im sichtbaren Spektralbereich transparent oder transluzent. Lediglich eine durch die Druckschicht erzeugte Lichtstreuung oder Lichtbrechung kann in diesem Falle zu dessen optischer Wahrnehmung führen, die aber - außer im Falle einer Lichtbeugung (wenn die Größe der Musterelemente im Bereich der Lichtwellenlänge liegt) - keinen Farbeindruck hervorruft. Werden dagegen Lumineszenzmittel verwendet, die auch im sichtbaren Spektralbereich absorbieren, ist das Sicherheitsmerkmal unter normaler Beleuchtung farbig.

Die Lumineszenzmittel können gemäß der vorliegenden Erfindung beliebige Zusammensetzungen sein, sofern sie für die Durchführung eines digitalen Druckverfahrens geeignet sind. Dies schließt sowohl flüssige (Drucktinten), pastöse und dickflüssige (Druckfarben) als auch feste (trockene) Formulierungen (Farbpulver, Toner) ein. Farben, beispielsweise von gelb, orange und/oder violett) zu einer zweiten Lumineszenz-(Grund)Farbe, dann gegebenenfalls zu einer dritten, dann gegebenenfalls zu einer vierten Farbe usw. gekennzeichnet. Zwischen zwei reinen Lumineszenz-(Grund)Farben, die ausschließlich durch Musterelemente einer Art gebildet werden, befindet sich ein Farbübergang, der durch jeweilige Mischfarben (Mischung der Lumineszenz-(Grund)Farben) gekennzeichnet ist. Diese Mischfarben werden jeweils additiv erzeugt, weil die sie bildenden (Grund)Farben durch Lumineszenz entstehen.

Die Farbverlaufsstruktur ist durch Übergänge zwischen mindestens zwei verschiedenen Lumineszenzfarben gekennzeichnet, wobei unter verschiedenen Lumineszenzfarben verschiedene Farbtöne der Lumineszenz eines Farbtones zu verstehen sind. Von daher erstreckt sich die spektrale Unterschiedlichkeit der Lumineszenzmittel und ihrer Lumineszenzfarben unterschiedliche Farbtönungen der Lumineszenz. Der spektrale Unterschied zwischen den Lumineszenzen muss von einem Betrachter optisch unmittelbar wahrgenommen werden können. Andernfalls wäre eine Farbverlaufsstruktur nicht denkbar.

Die Farbverlaufsstruktur ist durch einen kontinuierlichen Übergang von einer ersten Lumineszenz-(Grund)Farbe (beispielsweise rot, grün oder blau gemäß dem RGB-Farbraum oder Mischungen dieser Farben, beispielsweise von gelb, orange und/oder violett) zu einer zweiten Lumineszenz-(Grund)Farbe, dann gegebenenfalls zu einer dritten, dann gegebenenfalls zu einer vierten Farbe usw. gekennzeichnet. Zwischen zwei reinen Lumineszenz-(Grund)Farben, die ausschließlich durch Musterelemente einer Art gebildet werden, befindet sich ein Farbübergang, der durch jeweilige Mischfarben (Mischung der Lumineszenz-(Grund)Farben) gekennzeichnet ist. Diese Mischfarben werden jeweils additiv erzeugt, weil die site bildenden (Grund)Farben durch Lumineszenz entstehen.

Die Farbverlaufsstruktur wird durch eine vorgegebene gerasterte Anordnung von Musterelementen eines ersten Lumineszenzmittels mit einer ersten Lumineszenzfarbe und von Musterelementen eines zweiten Lumineszenzmittels mit einer zweiten Lumineszenzfarbe in einer Druckebene auf einem Bedruckstoff, nämlich auf mindestens einer Oberfläche des Produktträgers, erzeugt. Gegebenenfalls können auch Musterelemente eines dritten Lumineszenzmittels, Musterelemente eines vierten Lumineszenzmittels usw. vorhanden sein. Somit ist die Farbverlaufsstruktur aus mindestens zwei Arten von Musterelementen gebildet, die mit jeweils einer der mindestens zwei Lumineszenzmittel erzeugt sind. Da die einzelnen Musterelemente wegen ihrer kleinen Abmessungen mit dem menschlichen Auge ohne technische Hilfsmittel nicht direkt wahrgenommen werden können (beispielsweise sind sie 10 bis 100 µm, vorzugsweise 30 bis 75 µm groß), sondern vielmehr mangels ausreichenden Auflösungsmögens des menschlichen Auges jeweils nur Cluster mehrerer benachbarter Musterelemente erkannt werden, wird jeweils eine Mischfarbe der diese Cluster bildenden Musterelemente wahrgenommen. Eine Anordnung von Musterelementen mehrerer Arten mit unterschiedlichen Lumineszenzfarben ergibt demnach einen optisch wahrnehmbaren Eindruck, der bei geeigneter Anordnung der Musterelemente der Farbverlaufsstruktur gemäß der vorliegenden Erfindung entspricht.

Das erfindungsgemäße Sicherheitsmerkmal kann entweder ein individualisierendes, beispielsweise personalisierendes, Merkmal oder ein nicht individualisierendes Merkmal sein. Falls es sich um ein nicht individualisierendes Sicherheitsmerkmal handelt, kann es beispielsweise das Wappen oder Logo der das Dokument ausgebenden Stelle sein. Falls es sich dagegen um ein personalisierendes Sicherheitsmerkmal handelt, kann es beispielsweise das Gesichtsbild des Dokumenteninhabers wiedergeben. Grundsätzlich sind natürlich auch andere Motive, beispielsweise ein Wappen oder Logo, denkbar. Beispielsweise das Gesichtsbild erscheint daher erfindungsgemäß unter Beleuchtungsbedingungen, die eine Lumineszenz der Musterelemente erlaubt. Durch Darstellung des Gesichtsbildes mittels einer Farbverlaufsstruktur erscheint dieses verfremdet, indem es in zwei oder mehr verschiedenen Lumineszenzfarben und deren Mischfarben, die ineinander übergehen, wiedergegeben ist, und zwar in Form eines leuchtenden Bildes mit der Kontur des Kopfes bzw. Gesichts sowie mit Kopf- bzw. Gesichtsdetails. Grundsätzlich sind natürlich beliebige Muster, beispielsweise Bildmotive, die mit einer Farbverlaufsstruktur wiedergegeben werden, denkbar.

Die Lumineszenzfarbe des Musters verändert sich innerhalb der Farbverlaufsstruktur kontinuierlich, d.h. ohne erkennbaren "Farbsprung", der durch eine Begrenzungslinie zwischen zwei Farbflächen mit unterschiedlichen Lumineszenzfarben gekennzeichnet wäre. Für den kontinuierlichen Farbübergang verändert sich die Farbe entlang einer einzigen Farbverlaufsrichtung oder alternativ in mehreren, beispielsweise zwei, drei oder mehr, Farbverlaufsrichtungen in der Musterebene. Zwei Farbverlaufsrichtungen können beispielsweise senkrecht zueinander angeordnet sein. Bei Erstellung einer durch Isochrome, d.h. mittels Linien dargestellte Orte gleicher Lumineszenzfarbe in der Musterebene, charakterisierten Farblandschaft verlaufen die Farbverlaufsrichtungen lokal senkrecht zu den Isochromen. Im Falle eines Überganges einer ersten Lumineszenzfarbe zu einer zweiten Lumineszenzfarbe zwischen zwei parallel nebeneinander liegenden Lumineszenzfeldern mit einheitlicher Lumineszenzfarbe verlaufen die Isochromen ebenfalls parallel zueinander und zwar parallel zu den Lumineszenzfeldern und die Farbverlaufsrichtung senkrecht dazu von dem ersten Lumineszenzfeld zum zweiten. Die Farbverlaufsstruktur muss sich jedoch nicht zwangsläufig zwischen zwei endlich ausgedehnten Lumineszenzfeldern einer ersten und einer zweiten Lumineszenzfarbe befinden. Vielmehr kann sich die Lumineszenzfarbe des Musters an jeder Stelle entlang der Farbverlaufsrichtung verändern; in diesem Falle sind die Lumineszenzfelder in der Farbverlaufsrichtung beliebig schmal. Beispielsweise kann die Farbverlaufsstruktur aus parallelen Farbstreifen gleicher Lumineszenzfarbe mit parallelen Isochromen bestehen, wobei die Isochromen geradlinig oder gekrümmt verlaufen können, beispielsweise entlang von Zick-Zack-Linien oder Sinuskurven oder dergleichen. Alternativ kann die Farbverlaufsrichtung auch gekrümmt sein, etwa entlang einer Spirale. Die Isochromen können auch entlang von Äquidensiten (Linien gleicher Schwärzung) eines in eine Schwarz/Weiß-Darstellung transformierten Motivs verlaufen. Dadurch kann das Motiv mit seinem Motiveinzelheiten mittels der Farbverlaufsstruktur wiedergegeben werden. Falls ferner zwei Farbverlaufsrichtungen senkrecht zueinander verlaufen, ergeben sich ineinander geschachtelte Quadrate oder Rechtecke jeweils gleicher Farbe, wenn die Isochromen geradlinig verlaufen. Und beispielsweise im Falle einer Vielzahl von von einem zentralen Punkt ausgehenden Farbverlaufsrichtungen ergeben sich ineinander geschachtelte Kreise oder Ellipsen jeweils gleicher Lumineszenzfarbe, in deren Zentrum sich ein Bereich in einer ersten Lumineszenzfarbe und an deren Peripherie sich ein Bereich einer zweiten Lumineszenzfarbe befinden. In allen Fällen sind die Bereiche gleicher Lumineszenzfarbe jedoch vorzugsweise praktisch infinitesimal schmal, wobei die kleinstmögliche Bereichseinheit durch jeweils ein Musterelement gebildet ist. Anstelle einer Farbverlaufsstruktur mit einem Farbverlauf von einer ersten Lumineszenzfarbe zu einer zweiten Lumineszenzfarbe kann auch ein Farbverlauf von der ersten Lumineszenzfarbe über die zweite Lumineszenzfarbe zu einer dritten Lumineszenzfarbe oder ein Farbverlauf von einer ersten Lumineszenzfarbe zu einer zweiten Lumineszenzfarbe, dann weiter wieder zu der ersten Lumineszenzfarbe usw. realisiert werden. Beliebige andere Gestaltungen sind auch möglich.

Zur Erzeugung der Lumineszenzfarben werden die Lumineszenzmittel mit elektromagnetischer Strahlung angeregt, die fürdie Lumineszenzerzeugung jeweils geeignet ist. In einer bevorzugten Weiterbildung der vorliegenden Erfindung können die Lumineszenzmittel dazu ausgebildet sein, aufgrund von Anregung mit UV-Strahlung im sichtbaren Spektralbereich zu lumineszieren. Grundsätzlich ist auch eine Anregung mit IR-Strahlung und Lumineszenz im sichtbaren Spektralbereich möglich. In diesem Falle müsste Lumineszenz mit Anti-Stokes-Verschiebung vorliegen, damit diese im sichtbaren Spektralbereich liegt. Die Anregungsstrahlung kann schmalbandig (spektrale Bandenbreite < 25 nm) oder breitbandig (spektrale Bandenbreite ≥ 25 nm) sein. Beispielsweise kann eine linienförmige Anregung bei 254 nm, 312 nm oder 365 nm verwendet werden, wenn das Anregungslicht UV-Strahlung ist. Hierfür sind jeweils geeignete Lumineszenzstoffe zu finden, die in geeignet formulierten Lumineszenzmitteln eingesetzt werden.

Die Musterelemerite werden vorzugsweise mittels eines Druckverfahrens hergestellt. Hierzu ist eine der Rasterung der Farbverlaufsstruktur entsprechende Druckvorlage zu schaffen. Ein digitales Druckverfahren hat den Vorteil, dass individualisierende, beispielsweise personalisierende, Musterflexibel, schnell und ohne großen Aufwand darstellbar sind. Daher kann dieses Verfahren beispielsweise für die Anbringung der Personendaten und des Gesichtsbildes der Person, die Inhaber eines Wert- und/oder Sicherheitsdokuments ist, beispielsweise eines Personalausweises oder eines Reispassdokuments, angewendet werden. Hierzu sind Rohdokumente oder andere Vorprodukte, die beispielsweise bereits nicht individualisierende Sicherheitsmerkmale, die zur Authentifizierung des Dokuments dienen, aufweisen, mit den jeweiligen personalisierenden Informationen der Person zu versehen. Mit dem digitalen Druckverfahren können diese Informationen leicht in und/oder auf das Dokument aufgebracht werden.

Das digitale Druckverfahren kann ein kontaktloses (Non-Impact-) Druckverfahren, wie ein Tintenstrahldruckverfahren (Inkjet-Druckverfahren), oder ein Kontakt-Druckverfahren, etwa ein Transfer-Druckverfahren, wie ein xerographisches Druckverfahren, sein. Bevorzugter Weise wird die Farbverlaufsstruktur mit einem Tintenstrahldruckverfahren erzeugt.

Der Vorteil des erfindungsgemäßen Sicherheitsmerkmals besteht darin, dass es mit einem sehr präzise definierten Layout erzeugbar ist und daher nur mit äußerst großem Aufwand nachgestellt werden kann. Der Farbverlauf ist durch die gerasterte Anordnung einzelner Musterelemente mit definierter Farbe und definierter Position sehr exakt definiert, sodass eine Untersuchung des Sicherheitsmerkmals zwangsläufig eine Fälschung oder Verfälschung aufdecken würde. Es ist nämlich praktisch ausgeschlossen, die exakte Verteilung der Musterelemente mit deren jeweiliger Farbe nachzustellen, wenn die Daten für das Layout nicht zur Verfügung stehen. Für eine Nachstellung wäre es zudem erforderlich, die Farbverteilung der Farbverlaufsstruktur in ihrer Anordnung relativ zu dem Motiv des Musters zu kopieren. Darüber hinaus wird durch die Verwendung geeigneter Lumineszenzmittel, mit denen das Muster erstellt wird, eine Nachstellung noch weiter erschwert, da deren Identität und nicht nur der vom menschlichen Auge wahrnehmbare Lumineszenz-Farbeindruck ebenfalls nachgestellt werden müsste. Denn gleiche Farbeindrücke können durch unterschiedliche Lumineszenzmittel in den Lumineszenzmitteln erzeugt werden, selbst wenn diese unterschiedliche Lumineszenzspektren aufweisen (metamere Lumineszenzmittel). Durch eine Spektralanalyse könnte daher eine ansonsten perfekte Nachstellung ebenfalls leicht aufgedeckt werden.

Zur Herstellung des erfindungsgemäßen Wertund/oder Sicherheitsdokuments wird zunächst (a) ein Produktträger des erfindungsgemäßen Wert- und/oder Sicherheitsproduktes, der auch ein Vorprodukt des Wertund/oder Sicherheitsproduktes sein kann, bereitgestellt, und (b) anschließend wird, vorzugsweise mit dem digitalen Druckverfahren, das Muster mit der Farbverlaufsstruktur mittels der mindestens zwei unterschiedlichen Lumineszenzmittel auf mindestens einer der Oberflächen des/der Produktträger/s erzeugt. Hierzu werden die einzelnen Lumineszenzmittel nacheinander mit dem erforderlichen Layout auf den/die Produktträger gedruckt. Falls der/die Produktträger ein Vorprodukt für das Wertund/oder Sicherheitsprodukt ist, kann/können diese/r dann mit weiteren Produktträgerlagen verbunden oder mit einer aushärtenden Flüssigformulierung überzogen werden, sodass die mit dem Muster mit der Farbverlaufsstruktur versehenen Oberfläche(n) in dem Wertund/oder Sicherheitsprodukt innenliegend angeordnet ist/sind.

Zur Echtheitsprüfung des erfindungsgemäßen Wert- und/oder Sicherheitsprodukts mit Hilfe des erfindungsgemäßen Sicherheitsmerkmals wird (a) zunächst das Produkt mit dem Sicherheitsmerkmal in einer hierfür geeigneten Vorrichtung positioniert, und (b) dann das Sicherheitsmerkmal des Produkts unter Einwirkung von elektromagnetischer Strahlung, beispielsweise mit UV-Licht, beleuchtet und das Sicherheitsmerkmal in Form von im sichtbaren Spektralbereich emittiertem Lumineszenzlicht betrachtet. Dies schließt entweder eine unmittelbare Betrachtung durch den Menschen oder eine maschinelle Betrachtung mittels hierfür geeigneter Vorrichtungen und Bildauswertesysteme ein. Eine für die Authentifizierung geeignete Vorrichtung weist eine Halterung für das Produkt und eine Lichtquelle für elektromagnetische Strahlung für die Anregung der Lumineszenzmittel auf, beispielsweise eine UV-Lichtquelle. Ferner können noch eine geeignete Optik, Aufnahme- und/oder Auswertesysteme vorgesehen sein. Die Authentifizierung kann dann als erfolgreich angesehen werden, wenn das das Sicherheitsmerkmal bildende Muster unter Lumineszenz-Beleuchtungsbedingungen vom menschlichen Auge wahrgenommen wird und die vorgesehene Farbverlaufsstruktur zeigt. Bei einer näheren Untersuchung des Produkts kann ferner mittels einer vergrößernden Optik zusätzlich die Musterelementverteilung im Muster überprüft und verifiziert werden.

In einer bevorzugten Weiterbildung der vorliegenden Erfindung enthalten die Lumineszenzmittel jeweils mindestens einen Lumineszenzstoff. Als Lumineszenzstoffe können insbesondere Stoffe oder Stoffgemische eingesetzt werden, die eine Lumineszenz-Farbtönung hervorrufen. Jeder der Lumineszenzstoffe weist ein eigenes Emissionsspektrum auf, das für dessen Farbtönung verantwortlich ist. Die Lichtemission des Lumineszenzmittels kann schmalbandig (Licht mit einer Emission mit einer Halbwertsbreite von < 25 nm) oder breitbandig (Halbwertsbreite von ≥ 25 nm) sein.

Für die Lumineszenzmittel können organische oder anorganische Lumineszenzstoffe eingesetzt werden. Es können reine Lumineszenzstoffe oder Mischungen von Lumineszenzstoffen eingesetzt werden. Die Mischungen können entweder mindestens zwei anorganische Lumineszenzstoffe oder mindestens zwei organische Lumineszenzstoffe oder mindestens einen anorganischen und mindestens eine organischen Lumineszenzstoff enthalten. Typische Lumineszenzstoffe sind beispielsweise in US 3,474,027 A, DE 198 60 093 A und DE 10 2007 035 592 A1, deren Offenbarungsgehalt hiermit vollumfänglich in die vorliegende Beschreibung aufgenommen wird, angegeben. Es handelt sich beispielsweise um Pigmente, beispielsweise um mit Seltenen Erden (Luminophore) dotierte Materialien, die ein Wirtsgitter für die Luminophore bilden, wobei insbesondere mit Terbium, Cer und/oder Europium dotierte Stoffe, beispielsweise Oxysulfide und Oxynitride, verwendet werden. Die hiermit gebildeten Pigmente können zusätzlich mit organischen Stoffen ummantelt sein, um die Quantenausbeute der Lumineszenz zu erhöhen. Grundsätzlich sind auch organische Lumineszenzstoffe verwendbar, wie Rhodamin 6G oder Fluoreszein. Die Lumineszenzmittel können darüber hinaus weitere Stoffe enthalten, wie Bindemittel, Lösemittel, Additive und Hilfsstoffe, die in Farbmitteln für Druckverfahren üblich sind. Insofern wird beispielhaft auf DE 10 2008 012 421 B3 verwiesen, dessen Offenbarungsgehalt insbesondere für die Zusammensetzung einer Tintenstrahl-Drucktinte exemplarisch hiermit vollumfänglich in die vorliegende Beschreibung aufgenommen wird.

In einer weiteren bevorzugten Weiterbildung der vorliegenden Erfindung ist die Farbverlaufsstruktur durch jeweils eine sich in Richtung des Farbverlaufes im Wesentlichen kontinuierlich verändernde Menge der Lumineszenzmittel pro Flächeneinheit der Trägeroberfläche(n) gebildet.

Insbesondere kann die Lumineszenzmittelmenge pro Flächeneinheit der Oberfläche(n) des Produktträgers / der Produktträger durch mindestens einen der folgenden Parameter eingestellt werden: die Größe der Musterelemente, die Menge des Lumineszenzmittels pro Musterelement (Konzentration des Lumineszenzmittels im Musterelement) und den Abstand der Musterelemente (Entfernung zwischen den Mittelpunkten zweier benachbarter Musterelemente) voneinander. So können beispielsweise in dem Übergangsbereich zwischen zwei Lumineszenzfarben, der mit zwei unterschiedlichen Lumineszenzmitteln, einem Lumineszenzmittel erster Art und einem Lumineszenzmittel zweiter Art, erzeugt wird, eine schwächer werdende Lumineszenzfarbe des einen der beiden Lumineszenzmittel durch eine abnehmende Größe der entsprechenden Musterelemente und eine stärker werdende Lumineszenzfarbe des anderen Lumineszenzmittels durch eine zunehmende Größe der entsprechenden Musterelemente wiedergegeben werden und umgekehrt. In einem Farbverlauf werden dann die beispielsweise mit dem ersten der beiden Lumineszenzmittel gebildeten ersten Musterelemente entlang der Farbverlaufsrichtung kleiner, während die mit dem zweiten der beiden Lumineszenzmittel gebildeten zweiten Musterelemente gleichzeitig größer werden. Alternativ dazu oder zusätzlich kann auch die Menge des ersten Lumineszenzmittels in jedem ersten Musterelement entlang der Farbverlaufsrichtung abnehmen, während die Menge des zweiten Lumineszenzmittels in jedem der zweiten Musterelemente zunimmt. Alternativ oder zusätzlich dazu können auch der Abstand zwischen benachbarten ersten Musterelementen entlang der Farbverlaufsrichtung größer werden und gleichzeitig der Abstand zwischen benachbarten zweiten Musterelementen kleiner. In den beiden ersten dieser drei Fälle können die ersten und zweiten Musterelemente alternierend zueinander erzeugt werden, während sich die Anzahl der ersten und zweiten Musterelemente auf einer vorgegebenen Fläche im letzteren Falle entlang der Farbverlaufsrichtung verändert und daher zwischen benachbarten Musterelementen einer Art je nach Ort entlang der Farbverlaufsrichtung unterschiedlich viele Musterelemente der anderen Art angeordnet sind. Alternativ dazu können die Musterelemente verschiedener Arten auch in benachbarten Reihen angeordnet sein. Die Menge des Lumineszenzmittels in einem Musterelement kann beispielsweise durch Übereinander drucken mehrerer Musterelemente mit gleicher Lumineszenzfarbe erhöht werden.

Die Musterelemente werden vorzugsweise nicht überlappend erzeugt, sondern zueinander beabstandet oder allenfalls einander berührend. Im Falle von zwei übereinander erzeugten Musterelementen unterschiedlicher Lumineszenzfarben würde im Allgemeinen das oben liegende dominieren. Denn anders als im Falle des Druckes herkömmlicher Druckfarben, die im sichtbaren Bereich absorbieren und remittieren, kann die Lumineszenz eines oben liegenden Musterelements die Lumineszenz des darunter liegenden Musterelements überstrahlen, weil die Anregungsstrahlung fürdas untere Musterelement gegebenenfalls bereits von dem oberen Musterelement absorbiert wird. Daher wird das untere Musterelement nicht mehr ausreichend zur Lumineszenz angeregt.

Die Farbverlaufsstruktur kann hinsichtlich der Helligkeit der Lumineszenz der mindestens zwei ineinander übergehenden Farben eingestellt werden, indem die Menge des Lumineszenzmittels der jeweiligen Art von Musterelementen pro Flächeneinheit eingestellt wird.

Erfindungsgemäß wird die Farbverlaufsstruktur durch eine sich in zwei Dimensionen auf der/den Trägeroberfläche(n) kontinuierlich verändernde Menge des Lumineszenzmittels gebildet. Die Änderung der Menge des Lumineszenzmittels pro Fläche ergibt sich in diesem Falle durch eine Mittelung der Menge der beiden den Farbübergang bildenden Lumineszenzmittel über eine Fläche von mehreren Musterelementen und nicht wie im Falle des vorstehend beschriebenen eindimensionalen Überganges über eine Strecke entlang der Farbverlaufsrichtung. Die Farbverlaufsstruktur kann in dieser Alternative beispielsweise durch sich ineinander verschränkende Flächenbereiche gebildet sein, in denen sich jeweils nur eine Art von Musterelementen befindet.

Die Farbverlaufsstruktur ist durch mindestens zwei in der Farbverlaufsrichtung kammartig ineinander greifende Farbflächen gebildet. In diesem Falle wird die Farbverlaufsstruktur durch eine geeignete zweidimensionale Relativanordnung der beiden Musterelementarten erzeugt. Beispielsweise wechseln Flächen einer Art von Musterelementen quer zur Farbverlaufsrichtung mit Flächen der anderen Art von Musterelementen ab. Das kammartige Ineinandergreifen dieser Farbflächen wird, in der Farbverlaufsrichtung gesehen, beispielsweise durch eine kontinuierliche Verringerung von deren Breite erreicht. In der Farbverlaufsrichtung findet dann innerhalb einer Reihe von Musterelementen parallel zur Farbverlaufsrichtung jeweils ein Farbsprung statt. Benachbarte Farbflächen von Musterelementen, die mit unterschiedlichen Lumineszenzmitteln erzeugt sind, können beispielsweise eine im Wesentlichen dreieckige Form aufweisen. Sie erstrecken sich entlang der Farbverlaufsrichtung und sind über die gesamte Breite des Farbverlaufes angeordnet. Die Breite der Farbflächen (quer zur Farbverlaufsrichtung) ist möglichst so gering zu wählen, dass die einzelnen Flächen vom menschlichen Auge nicht mehr aufgelöst werden können. Daher werden benachbarte Flächen durch eine Mischfarbe der Flächen wahrgenommen.

Die beiden vorstehenden Ausführungsformen zur Bildung einer Farbverlaufsstruktur mittels im Raster angeordneter Musterelemente können auch kombiniert werden, indem die Mengen der Lumineszenzmittel pro Flächeneinheit innerhalb der kammartig ineinander verschränkten Farbfelder zusätzlich variieren.

Da die Lumineszenzintensitäten der Lumineszenzmittel in den Musterelementen unterschiedlich sein können, etwa weil die Lumineszenz-Quantenausbeuten oder die Anregungsquerschnitte der Lumineszenzmittel oder die Konzentrationen der Lumineszenzstoffe in den Lumineszenzmitteln unterschiedlich sind, kann durch eine jeweils angepasste Menge der Lumineszenzmittel pro Flächeneinheit auf der/den Trägeroberfläche(n) ein Ausgleich zur Erzielung gleicher Lumineszenzintensitäten der Lumineszenzfarben erreicht werden. Um ein gegenseitiges Überstrahlen durch höhere Intensität einer Lumineszenzfarbe oder ein Ineinanderlaufen einzelner Bildpunkte beider Lumineszenzfarben zu vermeiden, müssen der Druckprozess und die Aufrasterung entsprechend angepasst werden. Ebenso ist eine sinnvolle Kalibrierung der einzelnen Lumineszenzfarben vorteilhaft, um die unterschiedlichen Lumineszenzintensitäten auszugleichen und um einen ansprechenden Kontrast zu schaffen.

In einer weiteren Weiterbildung der vorliegenden Erfindung können die mit unterschiedlichen Lumineszenzmitteln gebildeten Musterelemente auf unterschiedlichen Oberflächen eines oder mehrerer Produktträger in unterschiedlichen Musterebenen gebildet werden, sodass die mehreren Musterebenen in dem Wert- und/oder Sicherheitsprodukt jeweils zueinander beabstandet sind. Dadurch können weitere Effekte erzielt werden, da die Musterelemente in unterschiedlichen Musterebenen je nach dem Winkel, unter dem das Produkt betrachtet wird, in verschiede-. ner Art und Weise zur Deckung kommen und daher unterschiedliche Farbeindrücke ergeben. Diese Art des Aufbaus des Wert- und/oder Sicherheitsprodukts setzt voraus, dass zumindest die Materialien des Produkts, die sich zwischen dem Betrachterauge und der von diesem am weitesten entfernt liegenden Musterebene befinden, transparent oder zumindest transluzent und farblos oder nur wenig gefärbt sind.

Grundsätzlich ist es ferner möglich, dass ein aus den Musterelementen mit Lumineszenzmittel erzeugtes Muster zusätzlich mit Musterelementen aus normalen Druckfarben überlagert wird, d.h. mit Druckfarben, die nicht oder nur wenig lumineszieren, die aber zur Erzeugung eines farbigen oder schwarz/weißen oder grau/weißen Druckbildes farbig oder schwarz/weiß oder grau/weiß absorbieren/remittieren. Damit die Lumineszenz der lumineszierenden Musterelemente durch die Absorption dieser anderen Musterelemente nicht wesentlich gestört wird, sollten diese Druckfarben lasierend sein und/oder zumindest nicht über die lumineszierenden Musterelemente überlappend gedruckt werden. Beispielsweise können übliche Druckfarben gemäß dem CYMK-Farbraum verwendet werden, indem eine mehrfarbige Darstellung in die Farbauszüge gemäß diesem Farbraum in mehrere Druckauszüge einzelner Farben separiert wird, die einzeln beispielsweise auf unterschiedliche Oberflächen im Produkt verdruckt werden. Die Druckauszüge mit diesen Druckfarben können wie die Lumineszenzfarben gerastert erzeugt werden. Sie können ebenso mit einem digitalen Druckverfahren oder alternativ mit einem Hochdruck-, Flachdruck-, insbesondere Offset-, oder Siebdruckverfahren erzeugt werden. Wenn mit diesen Druckfarben dasselbe Muster erzeugt wird wie mit dem Lumineszenzmittel, können die Muster beider Drucke abgestimmt, insbesondere passergenau, zueinander erzeugt werden. In diesem Falle können beispielsweise ein gerastertes Muster oder ein Linienmuster, das nur Konturen wiedergibt, in einer Schwarz/Weiß-Darstellung und zusätzlich das Lumineszenzbild mit der Farbverlaufsstruktur passergenau zueinander gedruckt werden, beispielsweise um die Musterdetails besser erkennen zu können. Es können auch verschiedene Muster übereinander gedruckt werden.

Das erfindungsgemäße Sicherheitsmerkmal befindet sich vorzugsweise innenliegend in dem erfindungsgemäßen Wert- und/oder Sicherheitsprodukt. Hierzu wird es beispielsweise zunächst auf die Oberfläche(n) des Produktträgers / der Produktträger aufgebracht, der/die anschließend mit einem oder mehreren anderen Lagen zusammengetragen wird/werden, sodass die mit dem Sicherheitsmerkmal versehene Oberfläche(n) innenliegend angeordnet ist/sind. Der/Die Produktträger und die Lagen werden dann unlösbar miteinander verbunden, beispielsweise durch Laminieren. Das Sicherheitsmerkmal kann die gesamte(n) Trägeroberfläche(n) oder nur einen Teil davon einnehmen.

Das Trägermaterial, auf dem die Musterelemente aufgebracht sind (der Bedruckstoff), ist Bestandteil des Wert- und/oder Sicherheitsprodukts. Beispielsweise handelt es sich um eine einzelne Trägermateriallage oder mehrere Trägermateriallagen, die mit weiteren Trägermateriallagen zu einem Stapel zusammengetragen und dann mit diesen weiteren Lagen beispielsweise in einem Laminierverfahren verbunden wird/werden, um das Wert- und/oder Sicherheitsdokument zu bilden. Alternativ kann das Trägermaterial auch ein bereits weitgehend fertig gestelltes Wert- und/oder Sicherheitsprodukt sein, auf dessen/deren eine oder beide Oberfläche/n das Sicherheitsmerkmal aufgebracht wird. Alternativ kann das Trägermaterial nach dem Aufbringen des Sicherheitsmerkmals zusätzlich mit einem Schutzlack überzogen werden, sodass das Sicherheitsmerkmal im fertig gestellten Produkt innenliegt und damit für einen Dritten nicht ohne weiteres manipulierbar ist. Der Schutzlack kann dem fertigen Produkt zudem eine erhöhte Abriebund Kratzfestigkeit verleihen. Für die Lamination kann ein herkömmliches Heiß/Kalt-Laminierverfahren eingesetzt werden.

Das Wert- und/oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier. Außerdem kann das Produkt auch aus mehreren dieser Materialien hergestellt sein. Bevorzugt besteht es aus PC oder PC/TPU/PC. Die Polymere können entweder ungefüllt oder gefüllt vorliegen. Im ersteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutzlack. Bevorzugt wird das Produkt aus 3 bis 12, vorzugsweise 4 bis 10 Folien, hergestellt. Ein solcherart gebildetes Laminat kann abschließend ein- oder beidseitig mit einem Schutzlack überzogen werden. Derart gebildete Overlaylagen schützen ein darunter angeordnetes Sicherheitsmerkmal und/oder verleihen dem Dokument die erforderliche Abriebfestigkeit. Das Sicherheitsmerkmal ist vorzugsweise auf einer der inneren Lagen gebildet.

Das Wert- und/oder Sicherheitsdokument kann zusätzlich zu dem erfindungsgemäßen Sicherheitsmerkmal weitere Sicherheitsmerkmale aufweisen, beispielsweise Melierfasern, Guillochen, Mikroschrift, Hologramme, Kinegramme und dergleichen. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein.

Zur näheren Erläuterung der Erfindung dienen nachfolgend beschriebene Figuren.
Fig. 1
   zeigt eine schematische Darstellung eines Rasters aus zwei Arten von Musterelementen, die gemeinsam ein Muster ergeben, zur Erzeugung einer Farbverlaufsstruktur in einer ersten nicht erfindungsgemäßen Ausführungsform;
Fig. 2
   zeigt eine schematische Darstellung eines Rasters aus zwei Arten von Musterelementen, die gemeinsam ein Muster ergeben, zur Erzeugung einer Farbverlaufsstruktur in einer zweiten nicht erfindungsgemäßen Ausführungsform;
Fig. 3
   zeigt eine schematische Darstellung eines Rasters aus zwei Arten von Musterelementen, die gemeinsam ein Muster ergeben, zur Erzeugung einer Farbverlaufsstruktur in einer dritten nicht erfindungsgemäßen Ausführungsform;
Fig. 4
   zeigt eine schematische Darstellung eines Rasters aus zwei Arten von Musterelementen, die gemeinsam ein Muster ergeben, zur Erzeugung einer Farbverlaufsstruktur in einer vierten erfindungsgemäßen Ausführungsform der vorliegenden Erfindung;
Fig. 5
   zeigt ein erfindungsgemäßes Wert- und/oder Sicherheitsdokument in Form eines Personalausweises in einer perspektivischen Darstellung mit einem erfindungsgemäßen Sicherheitsmerkmal.

In den Figuren bezeichnen gleiche Bezugszeichen Elemente mit derselben Funktion.

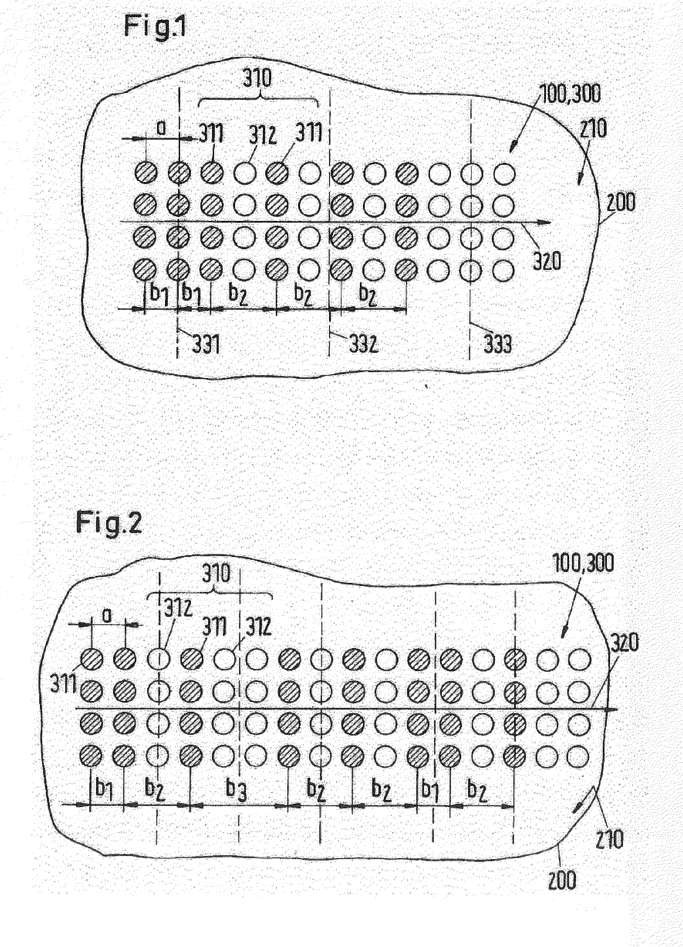

Das in Fig. 1 dargestellte Muster 300 zeigt eine Farbverlaufsstruktur mit einer Farbverlaufsrichtung 320. Das Muster ist aus einzelnen Musterelementen 310 in einer regelmäßigen Anordnung gebildet (in einem Raster). Der Abstand a der Musterelemente voneinander innerhalb einer Horizontalzeile ist mit dem Rasterabstand identisch. Es ist aus zwei Arten von Musterelementen gebildet, nämlich aus Musterelementen einer ersten Art (311, dunkel dargestellt) und Musterelementen einer zweiten Art (312, hell dargestellt). Die Musterelemente der ersten Art sind aus einem ersten Lumineszenzmittel gebildet, das unter Bestrahlung mit Anregungslicht, hier UV-Licht, rot luminesziert. Hierzu enthält das erste Lumineszenzmittel zusätzlich zu anderen üblichen Bestandteilen ein Pigment, das beispielsweise aus einem mit Eu dotierten Oxysulfid besteht. Das zweite Lumineszenzmittel luminesziert unter Bestrahlung mit Anregungslicht, hier UV-Licht, grün. Hierzu enthält das zweite Lumineszenzmittel zusätzlich zu anderen üblichen Bestandteilen ein Pigment, das beispielsweise aus einem mit Tb dotierten Oxysulfid besteht. Die Zusammensetzung der Lumineszenzmittel ist so gewählt, dass sie beispielsweise auf eine Trägerfolie 200 aus Polycarbonat verdruckbar sind. Sie sind mit einem Tintenstrahldrucker auf das Trägersubstrat aufgedruckt.

Damit sich ein Lumineszenz-Farbverlauf von der ersten Lumineszenzfarbe (links mit den dunkel dargestellten Musterelementen 311) zu der zweiten Lumineszenzfarbe (rechts mit den hell dargestellten Musterelementen 312) ergibt, variiert die gedruckte Menge des jeweiligen Lumineszenzmittels auf der Trägeroberfläche 210: Zunächst befinden sich in den Horizontalzeilen von Musterelementen 310 von links gesehen jeweils drei Musterelemente der ersten Art 311, dann abwechselnd jeweils eines der beiden Musterelementarten und schließlich jeweils drei Musterelemente der zweiten Art 312. Damit ist ein Farbverlauf von rot nach grün über eine Mischfarbe (orange) erzeugt. Damit variieren die Abstände von Musterelementen gleicher Art voneinander: Der Abstand bᵢ der Musterelemente der ersten Art entspricht, von links gesehen, zunächst dem Rasterabstand (b₁). Danacli erhöht sich der Abstand bᵢ auf den doppelten Rasterabstand (b₂). Für die Musterelemente der zweiten Art gilt, von rechts gesehen, Entsprechendes. Innerhalb der Horizontalzeilen verändert sich somit die Lumineszenzfarbe von einer rein roten Färbung am linken Rand zu einer rein grünen Farbe an rechten Rand, wobei sich zwischen diesen beiden Extremen die additiven Mischfarben zwischen rot und grün, d.h. von rot über orange und gelb nach grün, ergeben. Von links kommend werden dadurch Farbfronten gleicher Färbung, d.h. linienförmige Bereiche, die jeweils in sich monochrom sind, nämlich beispielsweise ein linienförmiger Bereich 331, der rein rot erscheint, dann ein Linienbereich 332, der orange erscheint, und schließlich ein Linienbereich 333, der rein grün erscheint, gebildet (dazwischen befinden sich sehr viele weitere Linienbereiche mit Zwischenfarben). Diese Bereiche liegen jeweils auf einer Isochromen 331, 332, 333, d.h. einer Linie mit in sich einheitlicher Färbung. Von Horizontalzeile zu Horizontalzeile (von oben nach unten) verändert sich dieser Farbverlauf nicht. Daher steht die Farbverlaufsrichtung auf den Isochromen senkrecht.

In Fig. 2 ist eine weitere Ausführungsform mit variierendem Abstand bᵢ der Musterelemente der jeweiligen Arten wiedergegeben, wobei wiederum die Musterelemente der ersten Art 311 mit einem rot lumineszierenden Lumineszenzmittel auf der Basis beispielsweise von mit Eu dotierten Oxysulfid und die Musterelemente der zweiten Art 312 mit einem grün lumineszierenden Lumineszenzmittel auf der Basis beispielsweise von mit Tb dotiertem Oxysulfid gebildet sind: Von links gesehen variiert der Abstand bᵢ der Musterelemente der ersten Art in jeder Horizontalzeile von einem Rasterabstand b₁ zu einem doppelten Rasterabstand b₂, dann zu einem dreifachen Rasterabstand b₃, dann wieder zu einem doppelten Rasterabstand b₂, dann wieder zu einem einfachen Rasterabstand b₁ und schließlich wieder zu einem doppelten Rasterabstand b₂. Für die Musterelemente der zweiten Art 312 gilt, von rechts gesehen, Entsprechendes. Damit entsteht ein Farbverlauf, bei dem sich, ausgehend von einer rein roten Farbe (links) zunächst eine Mischfarbe mit gleichen Anteilen von rot und grün, danach eine Mischfarbe mit einem stärkeren Anteil von grün, danach eine Mischfarbe mit gleichen Anteilen von rot und grün, danach eine Mischfarbe mit einem stärkeren Anteil von rot, danach eine Mischfarbe mit gleichen Anteilen von rot und grün und schließlich eine rein grüne Farbe ergeben. Somit ist mit einer geeigneten Anordnung der beiden Arten der Musterelemente nicht nur ein kontinuierlicher Übergang mit einer fortschreitenden Veränderung von einer Lumineszenzfarbe zu einer anderen möglich, sondern auch ein kontinuierliches Abwechseln zwischen mehreren Mischfarben im Farbverlauf möglich. Von Horizontalzeile zu Horizontalzeile (von oben nach unten) verändert sich dieser Farbverlauf nicht. Stellen gleichen Farbeindruckes (Isochrome) liegen demnach untereinander auf Senkrechten, sodass sich gerade Linien mit gleichem Farbeindruck ergeben.

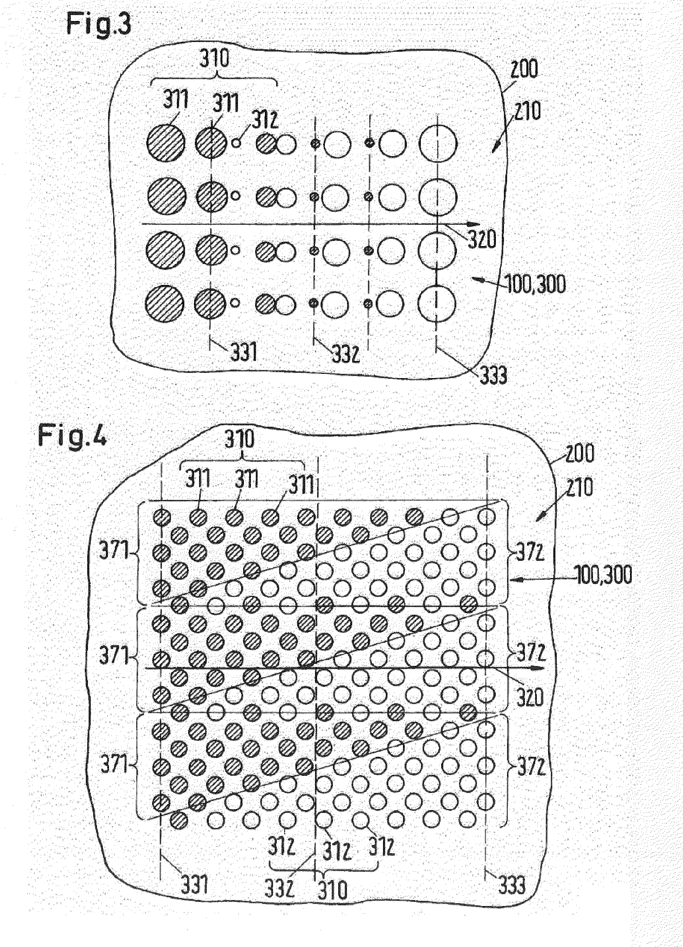

In Fig. 3 ist eine weitere Ausführungsform für die Nachbildung eines Farbverlaufes mit zwei verschiedenen Art von Musterelementen 310 wiedergegeben. Auch in diesem Falle wird die Menge des Lumineszenzmittels pro Flächenbereich auf der Trägeroberfläche 210 variabel gedruckt. Die Musterelemente der ersten Art 311 werden mit einem rot lumineszierenden Lumineszenzmittel auf der Basis beispielsweise von mit Eu dotiertem Oxysulfid und die Musterelemente der zweiten Art 312 mit einem grün lumineszierenden Lumineszenzmittel auf der Basis beispielsweise von mit Tb dotiertem Oxysulfid gebildet. Von links in der Farbverlaufsrichtung 320 kommend wird pro Mustereiement und damit pro Flächeneinheit zunächst eine große Menge des ersten Lumineszenzmittels gedruckt und kein zweites Lumineszenzmittel. Dies wird dadurch erreicht, dass die Musterelemente, die mit dem ersten Lumineszenzmittel gebildet sind, sehr groß sind, indem große Tintentropfen auf das Trägersubstrat aufgedruckt werden. Nach rechts werden dann immer kleinere Musterelemente mit dem ersten Lumineszenzmittel erzeugt, während gleichzeitig Musterelemente mit dem zweiten Lumineszenzmittel gedruckt werden, die eine zunehmende Größe aufweisen. Dieser Verlauf wiederholt sich in jeder horizontalen Musterelementzeile, sodass der Lumineszenzfarbverlauf in jeder dieser Zeilen gleich ist. Innerhalb der Zeilen verändert sich somit die Lumineszenzfarbe von einer rein roten Färbung am linken Rand nach rechts zu einer rein grünen Farbe, wobei sich zwischen diesen beiden Extremen alle additiven Mischfarben zwischen rot und grün, d.h. von rot über orange nach grün, ergeben. Von links kommend werden dadurch Farbfronten gleicher Färbung, d.h. linienförmige Bereiche, die jeweils in sich monochrom sind, nämlich beispielsweise ein linienförmiger Bereich 331, der rein rot erscheint, dann ein Linienbereich 332, der in einer Mischfarbe zwischen rot und grün erscheint, und schließlich ein Linienbereich 333, der grün erscheint, gebildet (dazwischen befinden sich sehr viele weitere Linienbereiche mit Zwischenfarben). Diese Bereiche liegen jeweils auf einer Isochromen 331, 332, 333.

Mit den vorstehenden Arten der Rasterung des Musters 300 wird eine Farbverlaufsstruktur erhalten, die sich bereits innerhalb einer einzigen Horizontalzeile ergibt.

In Fig. 4 ist eine erfindungsgemäßen Ausführungsform für ein Muster 300 aus in einem Raster angeordneten Musterelementen 310 aus zwei Lumineszenzmitteln, die mit unterschiedlichen Farben lumineszieren, schematisch dargestellt. Auch in diesem Falle ist das erste Lumineszenzmittel wie das in Fig. 1 verwendete Lumineszenzmittel rot, indem es als Lumineszenzstoff beispielsweise ein mit Eu dotiertes Oxysulfid enthält. Das zweite Lumineszenzmittel ist ebenso wie das in Fig. 1 verwendete zweite Lumineszenzmittel grün, indem es als Lumineszenzstoff beispielsweise ein mit Tb dotiertes Oxysulfid enthält.

Die Musterelemente der ersten Art 311 und die Musterelemente der zweiten Art 312 sind jeweils in dreieckigen Strukturen (Feldern) 371, 372 angeordnet, die ineinander greifen. Die jeweiligen Spitzen der Dreiecke einer Art 371 ragen zwischen die Dreiecke der anderen Art 372 und umgekehrt. Da die Breite der Dreiecke, beispielsweise an deren Basis so schmal ist, dass ein menschliches Auge diese mangels ausreichender Auflösung nicht einzeln erkennen kann, ergeben sich für einen Betrachter Lumineszenz-Mischfarben, die je nach Lage der Isochromen 331, 332, 333 orange oder gelb zwischen den beiden Grundfarben rot und grün sind. Für eine ausreichend breite Farbverlaufsstruktur sind die Dreiecke im Verhältnis zu ihrer Länge sehr viel schmaler als in Fig. 3 gezeigt zu gestalten, da die Breite unterhalb des Auflösungsvermögens des menschlichen Auges liegen soll und deren Länge die Breite der Farbverlaufsstruktur vorgibt. Der sich ergebende Farbeindruck führt demnach zu einem Farbübergang von rot über orange nach grün, wobei sich entlang der Farbverlaufsrichtung 320 auch alle Mischfarben zwischen den genannten Farben ergeben.

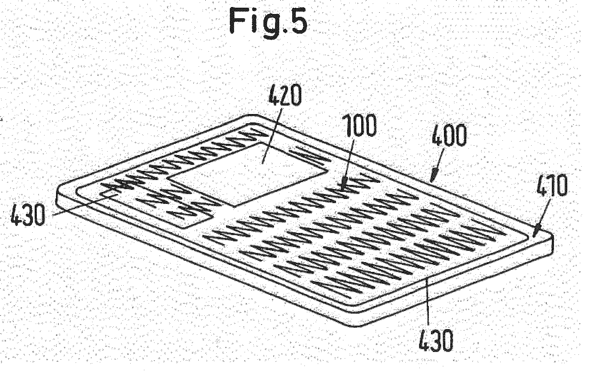

Das erfindungsgemäße Wert- und/oder Sicherheitsprodukt 400 mit dem erfindungsgemäßen Sicherheitsmerkmal 100 ist in Fig. 5 dargestellt. Das Produkt ist in Form einer Karte ausgebildet und dient als Personalausweis. Es weist eine Vorderseite 410 und eine Rückseite (nicht sichtbar) auf. Die Vorderseite ist in einem Feld 420 mit einem Gesichtsbild der Person versehen, der die Karte zugeordnet ist. Ferner befindet sich auf der Vorderseite ein Feld 430, in dem Personendaten dieser Person in Klarschrift sowie in kodierter (maschinenlesbarer) Form mit alphanumerischen Zeichen eingetragen sind. Fast die gesamte Oberfläche der Vorderseite der Karte wird zudem von dem eine mehrfarbige Farbverlaufsstruktur bildenden Sicherheitsmerkmal 100 eingenommen. Das Sicherheitsmerkmal befindet sich auf einem Produktträger auch innerhalb eines Feldes 430, das sich bis auf einen schmalen Rand und das von dem Gesichtsbild eingenommene Feld über die gesamte Vorderseite der Karte erstreckt. Auch im Bereich des die Personendaten enthaltenden Feldes befindet sich die Farbverlaufsstruktur. Da der Produktträger eine Lage innerhalb eines die Karte bildenden Laminats bildet, befindet sich der gerasterte Farbverlauf auf einer inneren Oberfläche in der Karte. Damit der Farbverlauf von der Vorderseite aus sichtbar ist, sind die vorderen Lagen des Laminats transparent und farblos. Durch die Farbverlaufsstruktur wird das Aussehen der Vorderseite der Karte in charakteristischer Weise geprägt. Die in schwarzer Schrift gehaltenen Personendaten sind vor dem Hintergrund der Farbverlaufsstruktur gut lesbar.

## Patentansprüche

1. Sicherheitsmerkmal (100) für ein Wert- und/oder Sicherheitsprodukt (400), gebildet durch ein auf mindestens einer Trägeroberfläche (210) gebildetes Muster (300), das eine aus in einem Raster angeordneten Musterelementen (310), mit einem digitalen Druckverfahren gebildete Farbverlaufsstruktur aufweist, wobei die Farbverlaufsstruktur mit mindestens zwei spektral unterschiedlich lumineszierenden Lumineszenzmitteln erzeugt ist, wobei die Musterelemente wegen ihrer Abmessungen mit dem menschlichen Auge ohne technische Hilfsmittel nicht direkt wahrnehmbar sind,
**dadurch gekennzeichnet, dass**
die Farbverlaufsstruktur durch eine zweidimensionale Anordnung der Musterelemente (310) gebildet ist,
wobei die Farbverlaufsstruktur durch mindestens zwei in einer Farbverlaufsrichtung (320) kammartig ineinander greifende Farbflächen (371, 372) gebildet ist.

2. Sicherheitsmerkmal (100) nach Anspruch 1, **dadurch gekennzeichnet, dass** die Farbverlaufsstruktur durch eine sich entlang eines Farbverlaufes im Wesentlichen kontinuierlich verändernde Menge des jeweiligen Lumineszenzmittels pro Flächeneinheit der mindestens einen Trägeroberfläche (210) gebildet ist.

3. Sicherheitsmerkmal (100) nach Anspruch 2, **dadurch gekennzeichnet, dass** die jeweilige Menge des Lumineszenzmittels pro Flächeneinheit der mindestens einen Trägeroberfläche (210) durch mindestens einen der folgenden Parameter eingestellt ist: die Größe der Musterelemente (310), die Menge des Lumineszenzmittels pro Musterelement (310) und den Abstand (a) der Musterelemente (310) voneinander.

4. Sicherheitsmerkmal (100) nach einem der vorstehenden Ansprüche, **dadurch gekennzeichnet, dass** das erste Lumineszenzmittel ein mit Tb dotiertes Wirtsgitter und das zweite Lumineszenzmittel ein mit Eu dotiertes Wirtsgitter enthalten.

5. Sicherheitsmerkmal (100) nach einem der vorstehenden Ansprüche, **dadurch gekennzeichnet, dass** die Farbverlaufsstruktur mit einem Tintenstrahldruckverfahren erzeugt ist.

6. Wert- und/oder Sicherheitsprodukt (400), aufweisend einen Produktträger (200) sowie mindestens ein auf oder in dem Produktträger (200) angeordnetes Sicherheitsmerkmal (100) nach einem der Ansprüche 1 bis 5.

## Claims

1. A security feature (100) for a valuable and/or security product (400), formed by a pattern (300) that is formed on at least one carrier surface (210), which has a color progression structure that is formed with a digital printing method from pattern elements (310) arranged in a grid, wherein the color progression structure is produced with at least two luminescence means that exhibit at least two spectrally different luminescences, wherein the pattern elements cannot be perceived directly with the human eye without technical aids on account of their dimensions,
**characterized in that** the color progression structure is formed by a twodimensional arrangement of the pattern elements (310),
wherein the color progression structure is formed by at least two color areas (371, 372) that mesh in the manner of a comb in a color progression direction (320).

2. The security feature (100) as claimed in claim 1, **characterized in that** the color progression structure is formed by a quantity of the respective luminescence means per unit area of the at least one carrier surface (210) that substantially continuously changes along a color progression.

3. The security feature (100) as claimed in claim 2, **characterized in that** the respective quantity of the luminescence means per unit area of the at least one carrier surface (210) is adjusted by way of at least one of the following parameters: the size of the pattern elements (310), the quantity of the luminescence means per pattern element (310), and the spacing (a) between the pattern elements (310).

4. The security feature (100) as claimed in one of the preceding claims, **characterized in that** the first luminescence means contains a Tb-doped host lattice and the second luminescence means contains a Eu-doped host lattice.

5. The security feature (100) as claimed in one of the preceding claims, **characterized in that** the color progression structure is produced using an inkjet printing method.

6. A valuable and/or security product (400), having a product carrier (200) and at least one security feature (100) according to one of claims 1 to 5 that is arranged on or in the product carrier (200).

## Revendications

1. Caractéristique de sécurité (100) pour un produit de valeur et/ou de sécurité (400), formé par un motif (300) formé sur au moins une surface de support (210), lequel motif présente une structure de dégradé de couleur formée à partir d'éléments de motif (310) disposés dans une trame à l'aide d'un procédé d'impression numérique, sachant que la structure de dégradé de couleur est produite à l'aide d'au moins deux moyens luminescents à luminescence spectrale différente, sachant que les éléments de motif ne peuvent pas être perçus directement à l'œil nu sans moyens d'assistance techniques du fait de leurs dimensions,
**caractérisée en ce que** la structure de dégradé de couleur est formée par un ensemble bidimensionnel des éléments de motif (310),
sachant que la structure de dégradé de couleur est formée par au moins deux surfaces de couleur (371, 372) venant en prise l'une avec l'autre à la manière d'un peigne dans une direction de dégradé de couleur (320).

2. Caractéristique de sécurité (100) selon la revendication 1, **caractérisée en ce que** la structure de dégradé de couleur est formée par une quantité, variable essentiellement en continu le long d'un dégradé de couleur, du moyen luminescent respectif par unité de surface de la surface de support (210) au moins au nombre de une.

3. Caractéristique de sécurité (100) selon la revendication 2, **caractérisée en ce que** la quantité respective du moyen luminescent est ajustée par unité de surface de la surface de support (210) au moins au nombre de une par au moins un des paramètres suivants : la dimension des éléments de motif (310), la quantité du moyen luminescent par élément de motif (310) et la distance (a) des éléments de motif (310) les uns des autres.

4. Caractéristique de sécurité (100) selon l'une quelconque des revendications précédentes, **caractérisée en ce que** le premier moyen luminescent contient une grille hôte dopée avec du Tb, et **en ce que** le deuxième moyen luminescent contient une grille hôte dopée avec du Eu.

5. Caractéristique de sécurité (100) selon l'une quelconque des revendications précédentes, **caractérisée en ce que** la structure de dégradé de couleur est produite à l'aide d'un procédé d'impression à jet d'encre.

6. Produit de valeur et/ou de sécurité (400), présentant un support de produit (200) ainsi qu'au moins une caractéristique de sécurité (100) selon l'une quelconque des revendications 1 à 5, disposée sur ou dans le support de produit (200).
